# NEUE EUROPÄISCHE PATENTSCHRIFT

(11) **EP 0 882 094 B2**
(45) Veröffentlichungstag und Bekanntmachung des Hinweises auf die Entscheidung über den Einspruch: **09.07.2008**
(45) Hinweis auf die Patenterteilung: 27.10.1999
(21) Anmeldenummer: 97905049.9
(22) Anmeldetag: 19.02.1997
(51) Int. Cl.: C08L 57/00, C08F 8/30, C08K 5/17, B05D 1/00, C08J 7/04

(54) **FORMALDEHYDFREIE BESCHICHTUNGSMITTEL FÜR FORMKÖRPER**
FORMALDEHYDE-FREE COATING MATERIAL FOR MOULDINGS
AGENT DE REVETEMENT EXEMPT DE FORMALDEHYDE POUR OBJETS FA ONNES

(30) Priorität: 21.02.1996 DE 19606392
(43) Veröffentlichungstag der Anmeldung: 09.12.1998
(73) Patentinhaber: BASF SE, 67056 Ludwigshafen (DE)
(72) Erfinder: RECK, Bernd, D-67269 Grünstadt (DE); WISTUBA, Eckehardt, D-67098 Bad Dürkheim (DE); BECKERLE, Wilhelm, Friedrich, D-67240 Bobenheim-Roxheim (DE); KISTENMACHER, Axel, D-67098 Bad Dürkheim (DE); RUPANER, Robert, D-67059 Ludwigshafen (DE); HUMMERICH, Rainer, D-67551 Worms (DE)
(86) Internationale Anmeldenummer: PCT/EP1997/000773
(87) Internationale Veröffentlichungsnummer: WO 1997/031060

(56) Entgegenhaltungen:
- EP-A- 0 445 578
- EP-A- 0 583 086
- EP-A- 0 651 088
- DD-A- 247 456
- DE-A- 1 720 712
- DE-A- 2 214 450
- DE-A- 2 357 951
- DE-A- 3 112 694
- DE-C- 864 151
- JP-A- 2 051 531
- JP-A- 51 132 295
- JP-A- 56 104 905
- NL-A- 7 407 556

## Beschreibung

Die Erfindung betrifft die Verwendung von Beschichtungsmitteln zur Beschichtung von Formkörpern und Platten.

Formkörper, z.B. Schalldämmplatten, bestehen oft aus Fasern oder Füllstoffen, welche durch ein Bindemittel, z.B. Stärke oder wäßrige Polymerdispersionen gebunden, d.h. verfestigt sind.

Formkörper oder Platten können auf der Oberfläche mit einem Beschichtungsmittel beschichtet bzw. imprägniert werden, um die Eigenschaften der Formkörper bzw. Platten weiter zu verbessern.

In EP 123 234 wird darauf hingewiesen, daß solche Platten zur Verbesserung der Feuchtebeständigkeit häufig mit Formaldehyd-Kondensationsharzen beschichtet bzw. imprägniert werden müssen. Nachteilig an derartig behandelten Platten ist die langsame Formaldehydfreisetzung aus dem Kondensationsharz, was insbesondere bei einer Anwendung in geschlossenen Räumen von Nachteil ist.

In EP 386 579 sind Formkörper beschrieben, die dadurch erhältlich sind, daß man Formgrundkörper, die hauptsächlich aus mineralischen Fasern, nichtfasrigen mineralischen Füllstoffen und Stärke aufgebaut sind, mit Massen imprägniert, die als Bindemittel Copolymerisate enthalten, die aus
60-95 Gew.-% Methylmethacrylat (I)
5-40 Gew.-% Acryl und/oder Methacrylsäure (II)
0-35 Gew.-% eines oder mehrerer Acrylsäureester eines C₁- bis C₈-Alkanols (III)
0- 5 Gew.-% copolymerisierbarer mehrfach ungesättigter Monomerer (VI)
- 0- 5 % sonstiger copolymerisierbarer Monomerer (V)
in polymerisierter Form aufgebaut sind, wobei die Gewichtsanteile der Monomeren I, II, III und V innerhalb der angegebenen Grenzen so gewählt sind, daß ein nur aus diesen Monomeren aufgebautes Polymerisat eine Glastemperatur von 60 bis 125°C aufweisen würde.

Die mit derartigen Massen imprägnierten stärkehaltigen Platten weisen nach 48 stündiger Lagerung im feuchtwarmen Klima nicht befriedigende Durchbiegungen auf.

In EP 445 578 werden Bindemittel und Beschichtungsmittel für Platten beschrieben, die wenigstens eine hochmolekulare Polycarbonsäure und wenigstens ein mehrwertiges Amin, Alkanolamin oder einen mehrwertigen Alkohol enthalten. Als hochmolekulare Polycarbonsäuren werden Polyacrylsäure, Poly(Methylmethacrylat-co-n-Butylacrylat-co-Methacrylsäure) und Poly(Methylmethacrylat-co-Methacrylsäure) beschrieben. Als mehrwertige Alkohole bzw. Alkanolamine werden 2-Hydroxymethylbutandiol-1,4, Trimethylolpropan, Glycerin, Poly(Methylmethacrylat-co-Hydroxypropylacrylat), Diethanolamin und Triethanolamin eingesetzt. Maleinsäure wird zwar als ein mögliches Comonomer zur Herstellung der hochmolekularen Polycarbonsäuren genannt, die Verwendung von maleinsäurehaltigen Copolymerisaten wird aber nicht näher beschrieben. Vorzugsweise werden α,β-ungesättigte Carbonsäuren verwendet. Die Verwendung von Triethanolamin als Vernetzer wird zwar in einem Beispiel genannt, aber nur in Kombination mit einer aus einer Emulsionspolymerisation hervorgehenden wäßrigen Dispersion eines Copolymeren aus Methylmethacrylat und Methacrylsäure. Nachteilig ist der zu geringe Biegemodul der beschichteten, stärkehaltigen Platten. Es ist wünschenswert, der beschichteten Platte einen möglichst hohen Biegemodul zu verleihen, so daß auch im Laufe der mehrjährigen Verwendungsdauer keine unerwünschten Verformungen auftreten.

Aus der EP 583 086 sind formaldehydfreie, wäßrige Bindemittel zur Herstellung mechanisch stabiler, wärmeresistenter Glasfaservliese bekannt. Die Bindemittel enthalten Polycarbonsäuren und Polyole. Die Beschichtung oder Imprägnierung von Platten, die aus organischen und/oder anorganischen Fasern, nichtfasrigen mineralischen Füllstoffen sowie Stärke und/oder wäßrigen Polymerisatdispersionen aufgebaut sind, wird nicht erwähnt.

EP 651 088 beschreibt eine Methode zur Verfestigung von Zellulose-Substraten mit wäßrigen Zusammensetzungen aus Polycarbonsäuren, Polyole und phosphorhaltigen Beschleunigern. Die Beschichtung der Imprägnierung von Platten, die aus organischen und/oder anorganischen Fasern, nichtfasrigen mineralischen Füllstoffen sowie Stärke und/oder wäßrigen Polymerisatdispersionen aufgebaut sind, wird nicht erwähnt.

Nachteilig bei bisher bekannten Platten und Formkörpern aus organischen und/oder anorganischen Fasern, nichtfasrigen mineralischen Füllstoffen ist ihre zu starke Durchbiegung unter feuchten und/oder heißen Klimabedingungen, insbesondere wenn Stärke als Bindemittel für die Fasern, bzw. Füllstoffe verwendet wurden.

Aufgabe der vorliegenden Erfindung waren daher, formaldehydfreie Beschichtungs- und lmprägniermassen für Platten aus organischen und/oder anorganischen Fasern oder nichtfasrigen mineralischen Füllstoffen. Die beschichteten bzw. imprägnierten Platten sollen gute mechanische Eigenschaften, insbesondere einen hohen Biegemodul, unter heißen und feuchten Klimabedingungen aufweisen.

Demgemäß wurde die Verwendung eines formaldehydfreien, wäßrigen Bindemittels enthaltend
A) ein durch radikalische Polymerisation erhaltenes Polymerisat, welches zu 5 bis 100 Gew.% aus einem ethylenisch ungesättigten Dicarbonsäureanhydrid oder einer ethylenisch ungesättigten Dicarbonsäure, deren Carbonsäuregruppen eine Anhydridgruppe bilden können, besteht und
B) ein Alkanolamin mit mindestens zwei Hydroxylgruppen
als Beschichtungsmittel für Platten mit einer Dicke von 5 bis 100 mm, welche aus organischen oder anorganischen Fasern oder mineralischen Füllstoffen bestehen, die mit einem Polymerbindemittel verfestigt sind, wobei das formaldehydfreie Bindemittel nach Trocknung bei 50°C über 72 Stunden zu einem Film der Dicke 0,3 bis 1 mm und anschließender 15 minütiger Härtung bei 130°C an der Luft einen Gelgehalt über 50 Gew.% hat, gefunden. Gegenstand der Erfindung sind auch die so erhaltenen, beschichteten Formkörper.

Das wäßrige Bindemittel enthält ein Polymerisat A), welches zu 5 bis 100 Gew.-%, bevorzugt 5 bis 50 Gew.-%, besonders bevorzugt 10 bis 40 Gew.-% aus einem ethylenisch ungesättigten Dicarbonsäureanhydrid oder einer ethylenisch ungesättigten Dicarbonsäure, deren Carbonsäuregruppen eine Anhydridgruppe bilden können, aufgebaut ist (im folgenden Monomere a) genannt).

Geeignete ethylenisch ungesättigte Dicarbonsäuren sind im allgemeinen solche mit Carbonsäuregruppen an benachbarten Kohlenstoffatomen. Die Carbonsäuregruppen können auch in Form ihrer Salze vorliegen.

Als Monomere a) werden bevorzugt Maleinsäure, Maleinsäureanhydrid, Itaconsäure, Norbornendicarbonsäure, 1,2,3,6-Tetrahydrophthalsäure, 1,2,3,6-Tetrahydrophthalsäureanhydrid, deren Alkali- und Ammoniumsalze oder Mischungen daraus. Besonders bevorzugt sind Maleinsäure und Maleinsäureanhydrid.

Neben Monomeren a) kann das Polymerisat noch Monomere b) enthalten.

Als Monomere b) können beispielsweise eingesetzt werden:

Monoethylenisch ungesättigte **C₃-** bis C₁₀-Monocarbonsäuren, (Monomere b₁), wie z.B. Acrylsäure, Methacrylsäure, Ethylacrylsäure, Allylessigsäure, Crotonsäure, Vinylessigsäure, Maleinsäurehalbester wie Maleinsäuremonomethylester, deren Mischungen bzw. deren Alkali- und Ammoniumsalze.

Lineare 1-olefine, verzweigtkettige 1-olefine oder cyclische Olefine (Monomere b₂), wie z.B. Ethen, Propen, Buten, Isobuten, Penten, Cyclopenten, Hexen, Cyclohexen, Octen, 2,4,4-Trimethyl-1-penten gegebenenfalls in Mischung mit 2,4,4-Trimethyl-2-penten, C₈-C₁₀-Olefin, 1-Dodecen, C₁₂-C₁₄-Olefin, Octadecen, 1-Eicosen (C₂₀), C₂₀-C₂₄-Olefin; metallocenkatalytisch hergestellte Oligoolefine mit endständiger Doppelbindung, wie z.B. Oligopropen, Oligohexen und Oligooctadecen; durch kationische Polymerisation hergestellte Olefine mit hohem α-Olefin-Anteil, wie z.B. Polyisobuten.

Vinyl- und Allylalkylether mit 1 bis 40 Kohlenstoffatomen im Alkylrest, wobei der Alkylrest noch weitere Substituenten wie eine Hydroxylgruppe, eine Amino- oder Dialkylaminogruppe oder eine bzw. mehrere Alkoxylatgruppen tragen kann (Monomere b₃), wie z.B. Methylvinylether, Ethylvinylether, Propylvinylether, Isobutylvinylether, 2-Ethylhexylvinylether, Vinylcyclohexylether, Vinyl-4-hydroxybutylether, Decylvinylether, Dodecylvinylether, Octadecylvinylether, 2-(Diethylamino)ethylvinylether, 2-(Di-n-butyl-amino)ethylvinylether, Methyldiglykolvinylether sowie die entsprechenden Allylether bzw. deren Mischungen.

Acrylamide und alkylsubstituierte Acrylamide (Monomere b₄), wie z.B. Acrylamid. Methacrylamid, N-tert.-Butylacrylamid, N-Methyl(meth)acryhamid.

Sulfogruppenhaltige Monomere (Monomere b₅), wie z.B. Allylsulfonsäure, Methallylsulfonsäure, Styrolsulfonat, Vinylsulfonsäure, Allyloxybenzolsulfonsäure, 2-Acrylamido-2-methylpropansulfonsäure, deren entsprechende Alkali- oder Ammoniumsalze bzw. deren Mischungen.

C₁- bis C₈-Alkylester oder C₁- bis C₄-Hydroxyalkylester der Acrylsäure, Methacrylsäure oder Maleinsäure oder Ester von mit 2 bis 50 Mol Ethylenoxid, Propylenoxid. Butylenoxid oder Mischungen davon alkoxylierten C₁- bis C₁₈-Alkoholen mit Acrylsäure, Methacrylsäure oder Maleinsäure (Monomere b₆), wie z.B. Methyl(meth)acrylat, Ethyl (meth)acrylat, Propyl(meth)acrylat, Isopropyl(meth) acrylat, Butyl(meth)acrylat, Hexyl(meth)acrylat, 2-Ethylhexyl (meth)acrylat, Hydroxyethyl(meth)acrylat, Hydroxypropyl(meth) acrylat, Butandio1-1,4-monoacrylat, Maleinsäuredibutylester, Ethyldiglykolacrylat, Methylpolyglykolacrylat (11 EO), (Meth)acrylsäureester von mit 3,5,7,10 oder 30 Mol Ethylenoxid umgesetztem C₁₃/C₁₅-Oxoalkohol bzw. deren Mischungen.

Alkylaminoalkyl(meth)acrylate oder Alkylaminoalkyl(meth)acrylamlde oder deren Quaternisierungsprodukte (Monomere b₇), wie z. B. 2-(N,N-Dimethylamino)ethyl(meth)acrylat, 3-(N,N-Dimethylamino)propyl(meth)acrytat, 2-(N, N,N-Trimethylammonium)ethyl (moth)acrylat-chlorid, 2-Dimethylaminoethyl(meth)acrylamid, 3-Dimethylaminopropyl (meth)acrylamid, 3-Trimethylammoniumpropyl(meth)acrylamid-chlorid.

Vinyl- und Allylester von C₁- bis C₃₀-Monocarbonsäuren (Monomere b₈), wie z.B. Vinylformiat, Vinylacetat, Vinylpropionat, Vinylbutyrat, Vinylvalerat, Vinyl-2-ethylhexanoat, Vinylnonoat, Vinyldecanoat, Vinylpivalat, Vinylpalmitat, Vinylstearat, Vinyllaurat.

Als weitere Monomere b₉ seien noch genannt:

N-Vinylformamid, N-Vinyl-N-methylformamid, Styrol, α-Methylstyrol, 3-Methylstyrol, Butadien, N-Vinylpyrrolidon, N-Vinylimidazol, 1-Vinyl-2-methylimidazol, 1-Vinyl-2-methyl-imidazolin, N-Vinylcaprolactam, Acrylnitril, Methacrylnitril, Allylalkohol, 2-Vinylpyridin, 4-Vinylpyridin, Diallyldimethylammoniumchlorid, Vinylidenchlorid, Vinylchlorid, Acrolein, Methacrolein und Vinylcarbazol bzw. Mischungen davon.

Das Polymerisat kann neben Monomeren a) noch 0 bis 95 Gew.-% Monomere b enthalten. Bevorzugt enthält das Polymerisat neben Monomeren a) noch Monomere b in Mengen von 50 bis 95, besonders bevorzugt von 60 bis 90 Gew.-%.

Bevorzugte Monomere sind Acrylsäure, Methacrylsäure, Ethen, Propen, Buten, Isobuten, Cyclopenten, Methylvinylether, Ethylvinylether, Acrylamid, 2-Acrylamido-2-methylpropansulfonsäure, Vinylacetat, Styrol, Butadien, Acrylnitril bzw. Mischungen davon.

Besonders bevorzugt sind Acrylsäure, Methacrylsäure, Ethen, Acrylamid, Styrol und Acrylnitril bzw. Mischungen davon.

Ganz besonders bevorzugt sind Acrylsäure, Methacrylsäure und Acrylamid bzw. Mischungen davon.

Die Polymerisate können nach üblichen Polymerisationsverfahren hergestellt werden, z.B. durch Substanz-, Emulsions-, Suspensions-, Dispersions-, Fällungs- und Lösungspolymerisation.

Bei den genannten Polymerisationsverfahren wird bevorzugt unter Ausschluß von Sauerstoff gearbeitet, vorzugsweise in einem Stickstoffstrom. Für alle Polymerisationsmethoden werden die üblichen Apparaturen verwendet, z.B. Rührkessel, Rührkesselkaskaden, Autoklaven, Rohrreaktoren und Kneter Bevorzugt wird nach der Methode der Lösungs-, Emulsions-, Fällungs- oder Suspensionspolymerisation gearbeitet. Besonders bevorzugt sind die Methoden der Lösungs- und Emulsionspolymerisation. Die Polymerisation kann in Lösungs- oder Verdünnungsmitteln, wie z.B. Toluol, o-Xylol, p-Xylol, Cumol, Chlorbenzol, Ethylbenzol, technischen Mischungen von Alkylaromaten, Cyclohexan, technischen Aliphatenmischungen, Aceton, Cyclohexanon, Tetrahydrofuran, Dioxan, Glykolen und Glykol-derivaten, Polyalkylenglykolen und deren Derivate, Diethylether, tert.-Butylmethylether, Essigsäuremethylester, Isopropanol, Ethanol, Wasser oder Mischungen wie z.B. Isopropanol/Wasser-Mischungen ausgeführt werden. Vorzugsweise wird als Lösungs-oder Verdünnungsmittel Wasser gegebenenfalls mit Anteilen bis zu 60 Gew.% an Alkoholen oder Glykolen verwendet. Besonders bevorzugt wird Wasser eingesetzt.

Die Polymerisation kann bei Temperaturen von 20 bis 300, vorzugsweise von 60 bis 200°C durchgeführt werden. Je nach Wahl der Polymerisationsbedingungen lassen sich gewichtsmittlere Molekulargewichte z.B. von 800 bis 5 000 000, insbesondere von 1 000 bis 1 000 000 einstellen. Bevorzugt liegen die gewichtsmittleren Molekulargewichte M_{w} im Bereich von 2000 bis 400.000. M_{w} wird bestimmt durch Gelpermeationschromatographie (ausführliche Beschreibung in Beispielen).

Die Polymerisation wird vorzugsweise in Gegenwart von Radikale bildenden Verbindungen durchgeführt. Man benötigt von diesen Verbindungen bis zu 30, vorzugsweise 0,05 bis 15, besonders bevorzugt 0,2 bis 8 Gew.-%, bezogen auf die bei der Polymerisation eingesetzten Monomeren. Bei mehrkomponentigen Initiatorsystemen (z.B. Redox-Initiatorsystemen) beziehen sich die vorstehenden Gewichtsangaben auf die Summe der Komponenten.

Geeignete Polymerisationsinitiatoren sind beispielsweise Peroxide, Hydroperoxide, Peroxidisulfate, Percarbonate, Peroxiester, Wasserstoffperoxid und Azoverbindungen. Beispiele für Initiatoren, die wasserlöslich oder auch wasserunlöslich sein können, sind Wasserstoffperoxid, Dibenzoylperoxid, Dicyclohexylperoxidicarbonat, Dilauroylperoxid, Methylethylketonperoxid, Di-tert.-Butylperoxid, Acetylacetonperoxid, tert.-Butylhydroperoxid, Cumolhydroperoxid, tert.-Butylperneodecanoat, tert.-Amylperpivalat, tert.-Butylperpivalat, tert.-Butylperneohexanoat, tert.-Butylper-2-ethylhexanoat, tert.-Butyl-perbenzoat, Lithium-, Natrium-, Kalium- und Ammoniumperoxidisulfat, Azodiisobutyronitril, 2,2'-Azobis(2-amidinopropan)dihydrochlorid, 2-(Carbamoylazo)isobutyronitril und 4,4-Azobis(4-cyanovaleriansäure).

Die Initiatoren können allein oder in Mischung untereinander angewendet werden, z.B. Mischungen aus Wasserstoffperoxid und Natriumperoxidisulfat. Für die Polymerisation in wäßrigem Medium werden bevorzugt wasserlösliche Initiatoren eingesetzt.

Auch die bekannten Redox-Initiatorsysteme können als Polymerisationsinitiatoren verwendet werden. Solche Redox-Initiatorsysteme enthalten mindestens eine peroxidhaltige Verbindung in Kombination mit einem Redox-Coinitiator z.B. reduzierend wirkenden Schwefelverbindungen, beispielsweise Bisulfite, Sulfite, Thiosulfate, Dithionite und Tetrathionate von Alkalimetallen und Ammoniumverbindungen. So kann man Kombinationen von Peroxodisulfaten mit Alkalimetall- oder Ammoniumhydrogensulfiten einsetzen, z.B. Ammoniumperoxidisulfat und Ammoniumdisulfit. Die Menge der peroxidhaltigen Verbindung zum Redox-Coinitiator beträgt 30:1 bis 0,05:1.

In Kombination mit den Initiatoren bzw. den Redoxinitiatorsystemen können zusätzlich Übergangsmetallkatalysatoren eingesetzt werden, z.B. Salze von Eisen, Kobalt, Nickel, Kupfer, Vanadium und Mangan. Geeignete Salz sind z.B. Eisen-II-sulfat, Kobalt-II-chlorid, Nickel-II-sulfat, Kupfer-I-chlorid. Bezogen auf Monomeren wird das reduzierend wirkende Übergangsmetallsalz in einer Konzentration von 0,1 ppm bis 1 000 ppm eingesetzt. So kann man Kombinationen von Wasserstoffperoxid mit Eisen-II-Salzen einsetzen, wie beispielsweise 0,5 bis 30 % Wasserstoffperoxid und 0,1 bis 500 ppm Mohrsches Salz.

Auch bei der Polymerisation in organischen Lösungsmitteln können in Kombination mit den obengenannten Initiatoren Redox-Coinitiatoren und/oder Übergangsmetallkatalysatoren mitverwendet werden, z.B. Benzoin, Dimethylanilin, Ascorbinsäure sowie organisch lösliche Komplexe von Schwermetallen, wie Kupfer, Cobalt, Eisen, Mangan, Nickel und Chrom. Die üblicherweise verwendeten Mengen an Redox-Coinitiatoren bzw. Übergangsmetallkatalysatoren betragen hier üblicherweise etwa 0,1 bis 1 000 ppm, bezogen auf die eingesetzten Mengen an Monomeren.

Falls die Reaktionsmischung an der unteren Grenze des für die Polymerisation in Betracht kommenden Temperaturbereiches anpolymerisiert und anschließend bei einer höheren Temperatur auspolymerisiert wird, ist es zweckmäßig, mindestens zwei verschiedene Initiatoren zu verwenden, die bei unterschiedlichen Temperaturen zerfallen, so daß in jedem Temperaturintervall eine ausreichende Konzentration an Radikalen zur Verfügung steht.

Um Polymerisate mit niedrigem mittleren Molekulargewicht herzustellen, ist es oft zweckmäßig, die Copolymerisation in Gegenwart von Reglern durchzuführen. Hierfür können übliche Regler verwendet werden, wie beispielsweise organische SH-Gruppen enthaltende Verbindungen, wie 2-Mercaptoethanol, 2-Mercaptopropanol, Mercaptoessigsäure, tert.-Butylmercaptan, n-Octylmercaptan, n-Dodecylmercaptan und tert.-Dodecylmercaptan, C₁- bis C₄-Aldehyde, wie Formaldehyd, Acetaldehyd, Propionaldehyd, Hydroxylammoniumsalze wie Hydroxylammoniumsulfat, Ameisensäure, Natriumbisulfit oder Isopropanol. Die Polymerisationsregler werden im allgemeinen in Mengen von 0,1 bis 10 Gew.-%, bezogen auf die Monomeren eingesetzt. Auch durch die Wahl des geeigneten Lösungsmittels kann auf das mittlere Molekulargewicht Einfluß genommen werden. So führt die Polymerisation in Gegenwart von Verdünnungsmitteln mit benzylischen H-Atomen zu einer Verringerung des mittleren Molekulargewichtes durch Kettenübertragung.

Um höhermolekulare Copolymerisate herzustellen, ist es oft zweckmäßig, bei der Polymerisation in Gegenwart von Vernetzern zu arbeiten. Solche Vernetzer sind Verbindungen mit zwei oder mehreren ethylenisch ungesättigten Gruppen, wie beispielsweise Diacrylate oder Dimethacrylate von mindestens zweiwertigen gesättigten Alkoholen, wie z.B. Ethylenglykoldiacrylat, Ethylenglykoldimethacrylat, 1,2-Propylenglykoldiacrylat, 1,2-Propylenglykoldimethacrylat, Butandiol-1,4-diacrylat, Butandiol-1,4-dimethacrylat, Hexandioldiacrylat, Hexandioldimethacrylat, Neopentylglykoldiacrylat, Neopentylglykoldimethacrylat, 3-Methylpentandioldiacrylat und 3-Methylpentandioldimethacrylat. Auch die Acrylsäure- und Methacrylsäureester von Alkoholen mit mehr als 2 OH-Gruppen können als Vernetzer eingesetzt werden, z.B. Trimethylolpropantriacrylat oder Trimethylolpropantrimethacrylat. Eine weitere Klasse von Vernetzern sind Diacrylate oder Dimethacrylate von Polyethylenglykolen oder Polypropylenglykolen mit Molekulargewichten von jeweils 200 bis 9 000. Polyethylenglykole bzw. Polypropylenglykole, die für die Herstellung der Diacrylate oder Dimethacrylate verwendet werden, haben vorzugsweise ein Molekulargewicht von jeweils 400 bis 2 000. Außer den Homopolymerisaten des Ethylenoxids bzw. Propylenoxids können auch Blockcopolymerisate aus Ethylenoxid und Propylenoxid oder Copolymerisate aus Ethylenoxid und Propylenoxid eingesetzt werden, die die Ethylenoxid- und Propylenoxid-Einheiten statistisch verteilt enthalten. Auch die Oligomeren des Ethylenoxids bzw. Propylenoxids sind für die Herstellung der Vernetzer geeignet, z.B. Diethylenglykoldiacrylat, Diethylenglykoldimethacrylat, Triethylenglykoldiacrylat, Triethylenglykoldimethacrylat, Tetraethylenglykoldiacrylat und/oder Tetraethylenglykoldimethacrylat.

Als Vernetzer eignen sich weiterhin Vinylacrylat, Vinylmethacrylat, Vinylitaconat, Adipinsäuredivinylester, Butandioldivinylether, Trimethylolpropantrivinylether, Allylacrylat, Allylmethacrylat, Pentaerithrittriallylether, Triallylsaccharose, Pentaallylsaccharose, Pentaallylsucrose, Methylenbis(meth)acrylamid, Divinylethylenhamstoff, Divinylpropylenharnstoff, Divinylbenzol, Divinyldioxan, Triallylcyanurat, Tetraallylsilan, Tetravinylsilan und Bis- oder Polyacrylsiloxane (z.B. Tegomere^{®} der Th. Goldschmidt AG). Die Vernetzer werden vorzugsweise in Mengen von 10 ppm bis 5 Gew.-%, bezogen auf die zu polymerisierenden Monomere, eingesetzt.

Wird nach der Methode der Emulsions-, Fällungs-, Suspensions- oder Dispersionspolymerisation gearbeitet, so kann es vorteilhaft sein, die Polymertröpfchen bzw. Polymerteilchen durch grenzflächenaktive Hilfsstoffe zu stabilisieren. Typischerweise verwendet man hierzu Emulgatoren oder Schutzkolloide. Es kommen anionische, nichtionische, kationische und amphotere Emulgatoren in Betracht. Anionische Emulgatoren sind beispielsweise Alkylbenzolsulfonsäuren, sulfonierte Fettsäuren, Sulfosuccinate, Fettalkoholsulfate, Alkylphenolsulfate und Fettalkoholethersulfate. Als nichtionische Emulgatoren können beispielsweise Alkylphenolethoxylate, Primäralkoholethoxilate, Fettsäureethoxilate, Alkanolamidethoxilate, Fettaminethoxilate, EO/PO-Blockcopolymere und Alkylpolyglucoside verwendet werden. Als kationische bzw. amphotere Emulgatoren werden beispielsweise verwendet: Quaternisierte Aminalkoxylate, Alkylbetaine, Alkylamidobetaine und Sulfobetaine.

Typische Schutzkolloide sind beispielsweise Cellulosederivate, Polyethylenglykol, Polypropylenglykol, Copolymerisate aus Ethylenglykol und Propylenglykol, Polyvinylacetat, Polyvinylalkohol, Polyvinylether, Stärke und Stärkederivate, Dextran, Polyvinylpyrrolidon, Polyvinylpyridin, Polyethylenimin, Polyvinylimidazol, Polyvinylsuccinimid, Polyvinyl-2-methylsuccinimid, Polyvinyl-1,3-oxazolidon-2, Polyvinyl-2-methylimidazolin und Maleinsäure bzw. Maleinsäureanhydrid enthaltende Copolymerisate, wie sie z.B. in DE 2 501 123 beschrieben sind.

Die Emulgatoren oder Schutzkolloide werden üblicherweise in Konzentrationen von 0,05 bis 20 Gew.-%, bezogen auf die Monomere, eingesetzt.

Wird in wäßriger Lösung oder Verdünnung polymerisiert, so können die Monomere vor oder während der Polymerisation ganz oder teilweise durch Basen neutralisiert werden. Als Basen kommen beispielsweise Alkali- oder Erdalkaliverbindungen wie Natriumhydroxid, Kaliumhydroxid, Calciumhydroxid, Magnesiumoxid, Natriumcarbonat; Ammoniak; primäre, sekundäre und tertiäre Amine, wie Ethylamin, Propylamin, Monoisopropylamin, Monobutylamin, Hexylamin, Ethanolamin, Dimethylamin, Diethylamin, Di-n-propylamin, Tributylamin, Triethanolamin, Dimethoxyethylamin, 2-Ethoxyethylamin, 3-Ethoxypropylamin, Dimethylethanolamin, Diisopropanolamin oder Morpholin in Frage.

Weiterhin können auch mehrbasische Amine zur Neutralisation eingesetzt werden, wie z.B. Ethylendiamin, 2-Diethylaminethylamin, 2,3-Diaminopropan, 1,2-Propylendiamin, Dimethylaminopropylamin, Neopentandiamin, Hexamethylendiamin, 4,9-Dioxadodecan-1,12-diamin, Polyethylenimin oder Polyvinylamin.

Vorzugsweise werden zur partiellen oder vollständigen Neutralisation der ethylenische ungesättigten Carbonsäuren vor oder während der Polymerisation Ammoniak, Triethanolamin und Diethanolamin eingesetzt.

Besonders bevorzugt werden die ethylenisch ungesättigten Carbonsäuren vor und während der Polymerisation nicht neutralisiert. Bevorzugt wird auch nach der Polymerisation kein Neutralisierungsmittel, abgesehen vom Alkanolamin B), zugesetzt. Die Durchführung der Polymerisation kann nach einer Vielzahl von Varianten kontinuierlich oder diskontinuierlich durchgeführt werden. Üblicherweise legt man einen Teil der Monomeren gegebenenfalls in einem geeigneten Verdünnungsmittel oder Lösungsmittel und gegebenenfalls in Anwesenheit eines Emulgators, eines Schutzkolloids oder weiterer Hilfsstoffe vor, inertisiert, und erhöht die Temperatur bis zum Erreichen der gewünschten Polymerisationstemperatur. Es kann allerdings auch lediglich ein geeignetes Verdünnungsmittel vorgelegt sein. Innerhalb eines definierten Zeitraumes werden der Radikalinitiator, weitere Monomere und sonstige Hilfsstoffe, wie z.B. Regler oder Vernetzer jeweils gegebenenfalls in einem Verdünnungsmittel zudosiert. Die Zulaufzeiten können unterschiedlich lang gewählt werden. Beispielsweise kann man für den Initiatorzulauf eine längere Zulaufzeit wählen als für den Monomerzulauf.

Wird das Polymerisat nach dem Verfahren einer Lösungspolymerisation in Wasser gewonnen, so ist üblicherweise keine Abtrennung des Lösungsmittels notwendig. Besteht dennoch der Wunsch, das Polymerisat zu isolieren, kann z.B. eine Sprühtrocknung durchgeführt werden.

Wird das Polymerisat nach der Methode einer Lösungs-, Fällungs- oder Suspensionspolymerisation in einem wasserdampfflüchtigen Lösungsmittel oder Lösungsmittelgemisch hergestellt, so kann das Lösungsmittel durch Einleiten von Wasserdampf abgetrennt werden, um so zu einer wäßrigen Lösung oder Dispersion zu gelangen. Das Polymerisat kann von dem organischen Verdünnungsmittel auch durch einen Trocknungsprozeß abgetrennt werden.

Bevorzugt liegen die Polymerisate A) in Form einer wäßrigen Dispersion oder Lösung mit Feststoffgehalten von vorzugsweise 10 bis 80 Gew.-%, insbesondere 40 bis 65 Gew.-% vor.

Polymerisat A) kann auch durch Pfropfung von Maleinsäure bzw. Maleinsäureanhydrid bzw. einer Maleinsäure oder Maleinsäureanhydrid enthaltenden Monomermischung auf eine Pfropfgrundlage erhalten werden. Geeignete Pfropfgrundlagen sind beispielsweise Monosaccharide, Oligosaccharide, modifizierte Polysaccharide und Alkylpolyglykolether. Solche Pfropfpolymerisate sind beispielsweise in DE 4 003 172 und EP 116 930 beschrieben.

Als Komponente B) werden Alkanolamine mit mindestens zwei OH-Gruppen eingesetzt. Bevorzugt sind Alkanolamine der Formel 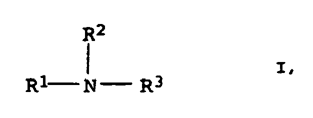 in der R¹ für ein H-Atom, eine C₁-C₁₀-Alkylgruppe oder eine C₁-C₁₀-Hydroxyalkylgruppe steht und R² und R³ für eine C₁-C₁₀-Hydroxyalkylgruppe stehen.

Besonders bevorzugt stehen R² und R³ unabhängig voneinander für eine C₂-C₅-Hydroxyalkylgruppe und R¹ für ein H-Atom, eine C₁-C₅-Alkylgruppe oder eine C₂-C₅-Hydroxyalkylgruppe.

Als Verbindungen der Formel I seien z.B. Diethanolamin, Triethanolamin, Diisopropanolamin, Triisopropanolamin, Methyldiethanolamin, Butyldiethanolamin und Methyldiisopropanolamin genannt. Besonders bevorzugt ist Triethanolamin.

Zur Herstellung der formaldehydfreien Bindemittel werden das Polymerisat A) und das Alkanolamin B) bevorzugt in einem solchen Verhältnis zueinander eingesetzt, daß das Molverhältnis von Carboxylgruppen der Komponente A) und der Hydroxylgruppen der Komponente B) 20:1 bis 1:1, bevorzugt 8:1 bis 5:1 und besonders bevorzugt 5:1 bis 1,7:1 beträgt (die Anhydridgruppen werden hierbei als 2 Carboxylgruppen berechnet).

Die Herstellung der formaldehydfreien, wäßrigen Bindemittel erfolgt z.B. einfach durch Zugabe des Alkanolamins zur wäßrigen Dispersion oder Lösung der Polymerisate A).

Die erfindungsgemäßen Bindemittel enthalten vorzugsweise weniger als 1,5 Gew.-%, insbesondere weniger als 1,0 Gew.-%, besonders bevorzugt weniger als 0,5 Gew.-% und ganz besonders bevorzugt weniger als 0,3 Gew.-%, insbesondere weniger als 0,1 Gew.-%, bezogen auf die Summe aus A) + B) eines Phosphor enthaltenden Reaktionsbeschleunigers. Phosphor enthaltende Reaktionsbeschleuniger sind in US 651 088 und US 583 086 genannt. Es handelt sich dabei insbesondere um Alkalimetallhypophoshpite, -phosphite, -polyphosphate, -dihydrogenphosphate, Polyphosphorsäure, Hypophosphorsäure, Phosphorsäure, Alkylphosphinsäure oder Oligomere bzw. Polymere dieser Salze und Säuren.

Die Bindemittel enthalten vorzugsweise keine Phosphor enthaltenden Reaktionsbeschleuniger bzw. keine zur Reaktionsbeschleunigung wirksame Mengen einer Phosphor enthaltenden Verbindung. Die erfindungsgemäßen Bindemittel können einen Veresterungskatalysator enthalten, wie z.B. Schwefelsäure oder p-Toluolsulfonsäure. Die erfindungsgemäßen Bindemittel können als Imprägnierungsmittel oder Beschichtungsmittel Verwendung finden. Die erfindungsgemäßen Bindemittel können einziger Bestandteil der Imprägnierungsmittel oder Beschichtungsmittel sein. Die Imprägnierungsmittel oder Beschichtungsmittel können jedoch auch noch weitere für die jeweilig beabsichtigte Verwendung geeignete Zusatzstoffe enthalten. In Betracht kommen z.B. Farbstoffe, Pigmente, Füllstoffe, Flammschutzmittel, Hydrophobierungsmittel, Biozide, Plastifizierungsmittel, Verdickungsmittel, Haftverbesserer, Reduktionsmittel und Umesterungskatalysatoren.

Die erfindungsgemäßen Bindemittel haben nach Trocknung (bei 50°C, Dauer 72 Stunden) zu einem Film der Dicke 0,3 bis 1 mm und anschließender 15 minütiger Härtung bei 130°C an der Luft vorzugsweise einen Gelgehalt über 50 Gew.-%, besonders bevorzugt über 60 Gew.-% und ganz besonders bevorzugt über 70 Gew.-%.

Nach Abschluß der Härtung werden die gehärteten Filme 48 Stunden in Wasser bei 23°C gelagert. Lösliche Anteile verbleiben dabei im Wasser. Der Film wird dann bei 50°C bis zur Gewichtskonstanz getrocknet und gewogen. Das Gewicht entspricht dem Gelgehalt in Gew.-%, bezogen auf das Gewicht vor Abtrennen der flüchtigen Anteile.. Gewichtskonstanz ist erreicht, wenn über die Gewichtsabnahme über einen Zeitraum von 3 Stunden weniger als 0,5 insbesondere weniger als 0,1 Gew.-% beträgt.

Die formaldehydfreien, wäßrigen Bindemittel werden als Beschichtungsmittel bzw. Imprägnierungsmittel (zusammenfassend als Beschichtungsmittel bezeichnet) für Formkörper verwendet.

Bei den Formkörpern handelt es sich um Platten mit einer Dicke von 5 bis 100 mm, besonders bevorzugt von 5 bis 30 mm und ganz besonders bevorzugt von 10 bis 25 mm. Die Kantenlängen der Platten liegen üblicherweise zwischen 200 und 2000 mm.

Insbesondere handelt es sich um Schalldämmplatten.

Die Formkörper bzw. Platten bestehen bevorzugt aus organischen oder anorganischen Fasern oder mineralischen Füllstoffen, wobei die Fasern und/oder Füllstoffe mit einem Polymerbindemittel verfestigt sind.

Als Fasern seinen insbesondere anorganische Fasern, z.B. Mineralfasern, Glasfasern und Steinwolle sowie organische Fasern, z.B. aus Altpapier hergestellte Cellulosefasern oder Holzfasern genannt.

Als Füllstoffe seien insbesondere Perlite, Ton genannt.

Als Polymerbindemittel seien z.B. Phenol-Formaldehydharze, Polymerdispersionen und Stärke genannt.

Neben den genannten Inhaltsstoffen können die Platten weiterhin noch übliche Brandschutzmittel wie z.B. Aluminiumsilikate und -hydroxide, Borate und/oder Phosphate enthalten.

Schließlich fügt man bei der Herstellung der Platten oft noch übliche Hydrophobierungsmittel wie z.B. Silikone (Polysiloxane) und/oder Wachse zu.

Verfahren zur Herstellung solcher Platten sind allgemein bekannt. Sie erfolgt z.B. durch Herstellung einer wäßrigen Suspension der Bestandteile, Entwässerung über ein Langsieb und anschließende Trocknung.

Die formaldehydfreien Bindemittel können bei der Verwendung als Beschichtungsmittel für Formkörper zusätzlich in der Beschichtungs- und Imprägnierungstechnologie übliche Hilfsstoffe enthalten. Beispiele hierfür sind feinteilige inerte Füllstoffe wie Aluminiumsilikate, Quarz, gefällte oder pyrogene Kieselsäure, Leicht- und Schwerspat, Talkum, Dolomit, oder Calciumcarbonat, farbgebende Pigmente wie Titanweiß, Zinkweiß, Eisenoxidschwarz u.a., Schauminhibitoren wie z.B. modifizierte Dimethylpolysiloxane, Haftvermittler sowie Konservierungsmittel. Die einzusetzenden Mengen dieser Zusatzstoffe sind dem Durchschnittsfachmann an sich bekannt und werden im Einzelfall gemäß den gewünschten Eigenschaften der besonderen Masse ausgewählt.

Bezogen auf das Gesamtgewicht des Beschichtungsmittels beträgt der Anteil des formaldehydfreien Bindemittels (berechnet als A) + B)) 1 bis 65 Gew.-%, der Anteil der inerten Füllstoffe 0 bis 85 Gew.-% und der Wasseranteil mindestens 10 Gew.-%.

Die Herstellung der Beschichtungsmassen erfolgt in zweckmäßiger Weise durch Einrühren der gegebenenfalls mitzuverwendenden Zusatzstoffe in eine 5 bis 65 %ige wäßrige Lösung oder Dispersion des Bindemittels.

Das Auftragen der Beschichtungsmassen kann durch Sprühen, Rollen oder Gießen erfolgen. Die aufgetragenen Mengen, bezogen auf das formaldehydfreie Bindemittel (berechnet als Summe A) + B)), beträgt im allgemeinen 2 bis 300, vorzugsweise 2 bis 100 g/m². Die Formkörper bzw. Platten können allseitig, mehrseitig oder einseitig beschichtet werden. Im Falle der Platten, insbesondere Schalldämmplatten erfolgt die Beschichtung vorzugsweise auf beiden Seiten.

Die beschichteten Formkörper werden bei Temperaturen von 100 bis 300, vorzugsweise von 150 bis 250°C getrocknet und die Beschichtungen gehärtet.

Die beschichteten Formkörper weisen sehr gute mechanische Eigenschaften, insbesondere eine gute Biegefestigkeit unter trockenen und feuchten Bedingungen auf. Die Beschichtungsmassen verbessern die mechanischen Eigenschaften, insbesondere die Steifigkeit auch unter feuchten und heißen Bedingungen. Die Verbesserung tritt besonders deutlich bei Formkörpern ein, die unbeschichtet schlechte mechanisch Eigenschaften haben.

### Beispiele

Abkürzungen: AS: Acrylsäure
MS: Maleinsäure

### Beschichtungsmittel A:

200 g einer wäßrigen Lösung eines Copolymerisates aus 80AS/20MS (Feststoffgehalt 44,5 %, pH 0,8; M_{w} 160000) werden gemischt mit 18 g Triethanolamin. pH-Wert: 3,7

Viskosität: 7900 mPas (bei 250 sec⁻¹ im Contraves Rheomat, DIN-Meßsystem 108).

Aktive Inhaltsstoffe: 49,0 Gew.-% (aktive Inhaltsstoffe sind alle Inhaltsstoffe außer Wasser).

### Gelanteil:

Von der Mischung wird eine derart berechnete Menge in eine Silikonform (15x7x0,5 cm) gegossen und bei 50°C (72 Stunden) getrocknet, so daß die Dicke des entstehenden Filmes zwischen ca. 0,3 und 0,7 mm liegt.

Etwa 1 g des so hergestellten Films werden 15 min bei 130°C in Luft gehärtet. Der gehärtete Film wird 48 h in destilliertem Wasser bei 23°C gelagert.

Aus dem Gewicht des wassergelagerten Filmes nach Rücktrocknung bis zur Gewichtskonstanz im Verhältnis zum ursprünglichen Gewicht des Filmes wird der Gelanteil berechnet. Er beträgt im vorliegenden Beispiel 83 %.

### Beschichtungsmittel B:

200 g einer wäßrigen Lösung eines Copolymerisates aus 55AS/45MS (Feststoffgehalt 50,0 %, pH 1,0; M_{w} 3000, K-Wert in Wasser = 20) werden mit 30 g Triethanolamin gemischt. pH-Wert: 3,4
Viskosität: 580 mPas
Aktive Inhaltsstoffe: 58,8 Gew.-%
Gelanteil: 55 %

### Beschichtungsmittel C:

Es wird eine Mischung aus 200 g Wasser, 36 g Polyacrylsäure (K-Wert des Natriumsalzes in Wasser bei 25°C = 110), 6,2 g Glycerin und 7,4 g Trimethylpropan hergestellt.
pH-Wert: 2,3
Viskosität: 26 mPas
Aktive Inhaltsstoffe: 20 Gew.-%

### Beschichtung und Prüfung von Mineralfaserplatten:

Auf eine handelsübliche 16 mm dicke Schalldämmplatte, die als Bindemittel Stärke enthielt, wurden mit einem Pinsel auf der Dekorseite die in der Tabelle angegebenen Beschichtungsmassen aufgetragen. Die Auftragsmenge betrug jeweils 100 g aktive Bestandteile/m². Die Platten wurden 15 min bei 200°C getrocknet.

Der Elastizitätsmodul Eb der unbeschichteten und beschichteten Platten wurde gemäß DIN 53362 bei 23°C und bei 60°C geprüft. Die Abmessungen der Prüfkörper betrug 25x5x1,6 cm.

| Prüfergebnisse: | | | |
|---|---|---|---|
| Beispiel | Beschichtungsmittel | Elastizitätsmodul E_{b} bei 23°C | Elastizitätsmodul E_{b} bei 60°C |
| | | N/mm2 | N/mm² |
| 1 | ohne | 240 | 235 |
| 2 | A | 400 | 390 |
| 3 | B | 390 | 375 |
| 4 | C | 370 | 280 |

## Patentansprüche

1. Verwendung eines formaldehydfreien, wäßrigen Bindemittels enthaltend
A) ein durch radikalische Polymerisation erhaltenes Polymerisat, welches zu 5 bis 100 Gew.-% aus einem ethylenisch ungesättigten Dicarbonsäureanhydrid oder einer ethylenisch ungesättigten Dicarbonsäure, deren Carbonsäuregruppen eine Anhydridgruppe bilden können, besteht und
B) ein Alkanolamin mit mindestens zwei Hydroxylgruppen
als Beschichtungsmittel für Platten mit einer Dicke von 5 bis 100 mm, welche aus organischen oder anorganischen Fasern oder mineralischen Füllstoffen bestehen, die mit einem Polymerbindemittel verfestigt sind, wobei das formaldehydfreie Bindemittel nach Trocknung bei 50°C über 72 Stunden zu einem Film der Dicke 0,3 bis 1 mm und anschließender 15 minütiger Härtung bei 130°C an der Luft einen Gelgehalt über 50 Gew.-% hat.

2. Verwendung gemäß Anspruch 1, wobei es sich bei den Platten um Schalldämmplatten handelt.

3. Verwendung gemäß Anspruch 1 oder 2, wobei das formaldehydfreie Bindemittel in einer Menge von 2 bis 300 g (berechnet als Summe A) + B) pro m² auf zumindest eine Oberfläche der Platten aufgetragen wird.

4. Verwendung gemäß einem der Ansprüche 1 bis 3, wobei das formaldehydfreie Bindemittel weniger als 1,5 Gew.-%, bezogen auf die Summe von A) + B) eines Phosphor enthaltenden Reaktionsbeschleunigers enthält.

5. Verwendung gemäß einem der Ansprüche 1 bis 4, wobei das Polymerisat A) zu 5 bis 100 Gew.-% aus Maleinsäure oder Maleinsäureanhydrid aufgebaut ist.

6. Verwendung gemäß einem der Ansprüche 1 bis 5, wobei es sich bei dem Alkanolamin um eine Verbindung 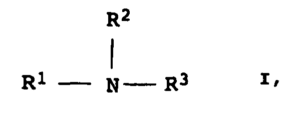 handelt, in der R¹ für ein H-Atom, eine C₁-C₁₀-Alkylgruppe oder eine C₁-C₁₀-Hydroxyalkylgruppe steht und R² und R³ für eine C₁-C₁₀-Hydroxyalkylgruppe stehen.

7. Verwendung gemäß einem der Ansprüche 1 bis 6, wobei es sich bei dem Alkanolamin um Triethanolamin handelt.

8. Verwendung gemäß einem der Ansprüche 1 bis 7, wobei das Molverhältnis der Carboxylgruppen und Säureanhydridgruppen (1 Säureanhydridgruppe berechnet als 2 Carboxylgruppen) von A) zu den Hydroxylgruppen von B) 20:1 bis 1:1 beträgt.

## Claims

1. The use of a formaldehyde-free aqueous binder comprising
A) a polymer obtained by free-radical polymerization and comprising 5 - 100 % by weight of an ethylenically unsaturated dicarboxylic acid anhydride or of an ethylenically unsaturated dicarboxylic acid whose carboxyl groups can form an anhydride group, and
B) an alkanolamine having at least two hydroxyl groups
as a coating composition for panels having a thickness of 5 - 100 mm which consist of organic or inorganic fibers or mineral fillers which are consolidated with a polymer binder, where the formaldehyde-free binder has a gel content of more than 50 % by weight after drying at 50°C for 72 hours to a film of from 0.3 to 1 mm in thickness and then curing for 15 minutes at 130°C in air.

2. The use according to claim 1, where the panels are soundproofing panels.

3. The use according to claim 1 or 2, where the formaldehyde-free binder is applied at a rate of 2 - 300 g (calculated as the sum of A) + B) per m² to at least one surface of the panels.

4. The use according to any of claims 1 to 3, where the formaldehyde-free binder comprises less than 1.5 % by weight, based on the sum of A) + B), of a phosphorus-comprising reaction accelerator.

5. The use according to any of claims 1 to 4, where from 5 to 100 % by weight of the polymer A) is composed of maleic acid or maleic anhydride.

6. The use according to any of claims 1 to 5, where the alkanolamine is a compound 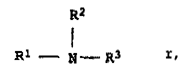 in which R¹ is hydrogen, C₁-C₁₀-alkyl or C₁-C₁₀-hydroxyalkyl and R² and R³ are C₁-C₁₀-hydroxyalkyl.

7. The use according to any of claims 1 to 6, where the alkanolamine is triethanolamine.

8. The use according to any of claims 1 to 7, where the molar ratio of the carboxyls and acid anhydride groups (1 acid anhydride group being calculated as 2 carboxyls) of A) to the hydroxyls of B) is 20:1 to 1:1.

## Revendications

1. Utilisation d'un liant aqueux, exempt de formaldéhyde, contenant :
A) un polymère obtenu par polymérisation par voie radicalaire, qui est constitué pour 5 à 100 % en poids d'un anhydride d'acide dicarboxylique éthyléniquement insaturé ou d'un acide dicarboxylique éthyléniquement insaturé, dont les groupes acide carboxylique peuvent former un groupe anhydride, et
B) une alcanolamine ayant au moins deux groupes hydroxyle
en tant que produit de revêtement pour des plaques ayant une épaisseur de 5 à 100 mm, qui sont constituées de fibres organiques ou minérales ou de matières de charge minérales consolidées avec un liant polymère, le liant exempt de formaldéhyde ayant une teneur de gel supérieur à 50 % en poids, après séchage à 50 °C pendant plues de 72 heures pour donner un film d'une épaisseur de 0,3 à 1 mm puis durcissement à l'air pendant 15 minutes à 130 °C.

2. Utilisation selon la revendication 1, dans laquelle les plaques sont des panneaux acoustiques.

3. Utilisation selon la revendication 1 ou 2, dans laquelle le liant exempt de formaldéhyde est appliqué sur au moins une surface des plaques en une quantité de 2 à 300 g (calculée en tant que somme de A) + B)) par m².

4. Utilisation selon l'une quelconque des revendications 1 à 3, dans laquelle le liant exempt de formaldéhyde contient moins de 1,5 % en poids, par rapport à la somme de A) + B), d'un accélérateur de réaction contenant du phosphore.

5. Utilisation selon l'une quelconque des revendications 1 à 4, dans laquelle le polymère A) est constitué pour 5 à 100 % en poids d'acide maléique ou d'anhydride d'acide maléique.

6. Utilisation selon l'une quelconque des revendications 1 à 5, dans laquelle l'alcanolamine est un composé : 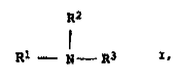 dans lequel R¹ est un atome de H, un groupe alkyle en C₁-C₁₀ ou un groupe hydroxyalkyle en C₁-C₁₀, et R² et R³ représentent un groupe hydroxyalkyle en C₁-C₁₀.

7. Utilisation selon l'une quelconque des revendications 1 à 6, dans laquelle l'alcanolamine est de la triéthanolamine.

8. Utilisation selon l'une quelconque des revendications 1 à 7, dans laquelle le rapport molaire des groupes carboxyle et des groupes anhydride d'acide (1 groupe anhydride d'acide étant compté comme 2 groupes carboxyle) de A) sur les groupes hydroxyle de B) est de 20:1 à 1:1.
